(19) Europäisches Patentamt
European Patent Office
Office européen des brevets

(11) **EP 4 641 963 A2**

(12) **EUROPEAN PATENT APPLICATION**

(43) Date of publication:
**29.10.2025 Bulletin 2025/44**

(21) Application number: **25168944.4**

(22) Date of filing: **07.04.2025**

(51) International Patent Classification (IPC):
**H04L 5/00** $^{(2006.01)}$    **H04L 1/00** $^{(2006.01)}$
**H04L 1/08** $^{(2006.01)}$

(52) Cooperative Patent Classification (CPC):
**H04L 5/0044; H04L 1/0009;** H04L 1/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.04.2024 IN 202441028167**
**04.04.2025 US 202519170109**

(71) Applicant: **Mavenir Systems, Inc.**
**Richardson, TX 75081 (US)**

(72) Inventors:
• **INGALE, Mangesh**
**411060 Pune (IN)**
• **KAIMALETTU, Sunil**
**560045 Bangalore (IN)**

(74) Representative: **Dompatent**
**Partnerschaft von Patent- und Rechtsanwälten mbB**
**Deichmannhaus am Dom**
**Bahnhofsvorplatz 1**
**50667 Köln (DE)**

(54) **SYSTEM AND METHOD FOR LINK ADAPTATION AND SCHEDULER ENHANCEMENTS FOR UL SLOT AGGREGATION**

(57) Systems and methods for link adaptation and to allocate and schedule transport blocks for UE slot aggregation.

**FIG. 9**

**Description**

**DESCRIPTION OF THE RELATED TECHNOLOGY**

a. Field of the Disclosure

The present disclosure relates to systems and methods for radio access networks. The present disclosure is related to the design of operation, administration and management of various network elements of 4G, 5G, and further ongoing generational mobile networks.

b. Description of the Related Art

Voice over New Radio (VoNR) is the voice over IP service for 5G. VoNR interfaces with a 5G core supporting the IMS core for voice support, a 5G RAN supporting VoNR and a UE supporting VoNR. If a cell edge UE does not have sufficient power to transmit one VoNR packet and headers in a slot, it is very challenging for a cell edge UE to do a VoNR call, and the UE cell edge call is also very demanding for the network. Conventional methods for addressing this as of the present disclosure have drawbacks in delay and quality of transmission.

**SUMMARY**

Described are implementations of a system and method for slot aggregation. In an implementation, described is a system comprising:
a New Radio (NR) base station comprising a link adaptation and resource allocation module configured to allocate resources in both time (K slots) and frequency domain (M Physical Resource Block (PRB)s) for a UE doing slot aggregation, the allocation comprising;

in the frequency domain, the allocation is M PRBs in a slot, with the total number of PRBs given as K x M; and
a total number of PRBs available across the K slots is same as a single grant with the K x M PRB allocation;
so that a transport block can be transmitted with multi-slot allocation the K slots x the M PRBs with a modulation and coding scheme ($MCI_i$) decided by a link adaptation algorithm of the a link adaptation and resource allocation module, the link adaptation algorithm deciding a same allocation as a single allocation of the K x M PRBs with the $MCI_i$, and which is greater than K times a size of the transport block of an M PRB allocation with $MCI_i$.

The link adaptation and resource allocation module of the base station ca be configured to, when executed by the processor, convey a higher TB size to a UE so that the UE can send a Voice over New Radio (VoNR) packet without segmentation in a multi slot transmission, the UE is configured to send the same encoded packet to each slot with different redundancy versions and the system is configured such that some of the initial transmission of the multi-slot bundle transmission results in cyclic redundancy check (CRC) failures at a receiver of the base station. However once more receptions of the transmission happen, and a code rate is reduced to a level a channel supports, the VoNR packet is successfully decoded in the base station, and at a last slot of the multi-slot transmission, the base station decodes the VoNR packet successfully with more than 99% probability.

A modulation and coding scheme (MCS) downlink control information ($MCS_{dci}$) can be configured to be signaled to the UE, and the UE can be configured to send: X bits in an uplink (UL), where X corresponds to size of one or two VoNR packets as a payload; and the $MCS_{dci}$ when meeting an $MCS_{dci}$ condition. The $MCS_{dci}$ condition can comprise:

condition 1) X being less than or equal to computed transport block size with a signaled $MCS_{dci}$, signalled number $PRB_{dci}$ ( $TBsize(MCS_{dci}, PRB_{dci})$ ); and
condition 2) the computed transport block size being less than or equal to a max supported transport block size computed with the MCS calculated by the link adaption module for UE $MCI_i$ and allocation size of N times signaled PRBs, where

$$N \times PRB_{dci} \left( TBsize(MCI_i, K \times PRB_{dci}) \right)$$

$$X \leq TBsize(MCS_{dci}, PRB_{dci}) \leq TBsize(MCI_i, K \times PRB_{dci});$$

where $TBsize(R, P)$ is a function to determine a predefined transport block size for MCS '$R$' and '$P$' PRBs;
$PRB_{dci}$, is decided by the link adaptation and resource allocation module based on UE transmit parameters; and

K is the number of repetitions in a multi-slot transmission.

The system can be configured to execute a method for finding $MCS_{dci}$ comprising: the base station being configured to increment the $MCS$ from $MCS_i$ to $MCS_{max}$ by at least:

a) for the MCS, determine the transport block size with signaling PRBs $TBsize(MCS, PRB_{dci})$;
b) if the transport block size satisfies both condition 1) and condition 2) for $MCS_{dci}$, set the $MCS$ as $MCS_{dci}$. and signal the grant to the UE through a DCI, with MCS set to $MCS_{dci}$ , and #PRBs as $PRB_{dci}$.;

if condition 1) satisfied but condition 2) fails, where the transport block size with a $MCS$ is greater than the max supported transport block size, then the base station allocates a smaller MCS to the UE than required for X bits by setting $MCS_{dci}$ = $MCS$ - 1 and signals the grant to the UE through DCI, with MCS set to $MCS_{dci}$ , and #PRBs as $PRB_{dci}$;

if condition 1) fails and the computed transport block is less than required X bits and a supported transport block size, increment the MCS and go to a);

if both condition 1) and condition 2) fail, the base station is configured to give a smaller allocation to the UE than required for X bits by setting $MCS_{dci}$ = $MCS$ - 1, and the grant through downlink control information (DCI) is signaled to the UE, with MCS set to $MCS_{dci}$ , and #PRBs as $PRB_{dci}$. The UE can be configured to segment the packet when the grant through DCI, with MCS set to $MCS_{dci}$ , and #PRBs as $PRB_{dci}$ is signaled for when condition 1) satisfied but condition 2) is failed, or if the grant for both condition 1) and condition 2) fails. To reduce the search for $MCS_{dci}$, the system can be configured to specify a configurable minimum MCS value based on expected VoNR packet size and minimum MCS of the UE and number of repetitions.

The system can be configured to find $MCS_{dci}$, by at least: changing the number of repetitions K slots in multi-slot transmission, whereby K can take values from a predefined set, and optimized values for $MCI_{dci}$, K, $PRB_{ddi}$ are found that satisfy the UE BSR requirement X which also satisfy the conditions 1) and 2): $X \le TBsize(MCS_{dci}, PRB_{dci}) \le TBsize(MCI_i, K * PRB_{dci})$. The base station can be configured to increment the K from 1 to $K_{max}$ as per the predefined set, where for each value of K, increase allocated PRBs 'P' from 1 to $PRB_{max}$, wherein MCS $MCS_i$, max PRB allocation $PRB_{max}$, maximum repetition is $K_{max}$, where $PRB_{max}$ and $K_{max}$ are configurable values.
The system can be configured to at least:

(a1) for the $MCI_i$, and K repetitions, and P PRBs determine the max transport block size $TBsize(MCI_i, K * P)$;
(b1) if X is less than or equal to the max supported transport size of the UE for P PRBs, search for $MCS_{dci}$ as given in feature 5for $MCS_{dci}$;
(c1) if the transport block size satisfies as given in feature 5for $MCS_{dci}$, then set the $MCS$ as $MCS_{dci}$ and signal the grant to UE through a DCI, with MCS set to $MCS_{dci}$ , and #PRBs as $PRB_{dci}$;
(d1) if condition for $MCS_{dci}$ is not satisfied and P is less than $PRB_{max}$, increment the PRBs P by one, and go to (a); and
(e1) if for $MCS_{dci}$ is not satisfied, but P is equal to $PRB_{max}$, and $K$ is less than $K_{max}$ increment K to next value possible value from the set and go to step (a1); and
(f1) if the condition for $MCS_{dci}$ is not satisfied, but P is equal to $PRB_{max}$, and $PRB_{max}$ and K is equal to $K_{max}$, identify the maximum $MCS_{dci}$ so that the transport block size with P PRBs $\overline{TBsize}(MCS_{dci}, P)$ is less than or equal to the max transport block size $TBsize(MCI_i, K * P)$ and signal to UE the grant through DCI, with MCS set to $MCS_{dci}$ , and #PRBs as P, number of repetitions set to $K$.

In an implementation, described is a method for slot aggregated user equipment (UEs) executing inter slot hopping and configured to avoid allocation overlapping Physical Random Access Channel (PRACH) in a slot, the method comprising:

when PRACH is on even subframe lower Physical Resource Block (PRB), a base station multi slot scheduler schedules a new transmission on even slot upper PRBs;
when PRACH is on an even subframe Upper PRB, the multi slot scheduler schedules a new transmission on an odd slot upper PRBs;
when PRACH is on an odd subframe Lower PRB, the multi slot scheduler schedules a new transmission on odd slot upper PRBs; and
when PRACH is on odd subframe Upper PRB, multi slot scheduler schedules a new transmission on an even slot upper PRBs.

In an implementation, described is a method for optimized packing for multiple user equipment (UEs) comprising: to increase a Physical Uplink Shared Channel(PUSCH) capacity, scheduling higher aggregation UEs first such that a higher AggregationFactor UE has a high priority if a P_LC is multiplied by the AggregationFactor, wherein for UE selection the UE priority is calculated:

$$P\_UE = P\_{LC} * AggregationFactor + P\_GBR + P\_PF,$$

or

$$P\_UE = (P\_LC + P\_GBR + P\_PF) * AggregationFactor;$$

where:

P_LC: is Priority based on 5QI QoS;
Slot Aggregation applies when 5QI=1 (VoNR), When 5QI!=1 then AggregationFactor =1;
P_GBR is Priority calculated based on a Guaranteed Bit Rate (GBR) metric,
P_PF is Priority calculated based on a fairness metric; and
the higher Aggregation UE is scheduled if the *slot number % AggregationFactor* = 0.

## BRIEF DESCRIPTION OF THE DRAWINGS

FIG. 1 is a block diagram of a system architecture.

FIG. 2 describes an EN-DC architecture.

FIG. 3 describes an NG-RAN architecture.

FIG. 4 shows the SGRAN-SGC-IMS architecture.

FIG. 5 shows an illustration of a power per resource block/power spectral density (PSD) for a power limited UE for grant with different RB sizes.

FIG. 6 is a flow chart and infographic showing the issues with power limited cell edge UE.

FIG. 7 an illustration showing segmenting and retransmissions.

FIG. 8 an illustration of mapping of encoded bits to REs across slots with normal HARQ repetition and repetition as part of slot aggregation.

FIG. 9 is a flow chart depicting a method for a Modulation and coding scheme.

FIG. 10 is a flow diagram depicting another method for a Modulation and coding scheme.

FIG. 11 shows an example of PRACH and slot aggregation.

FIG. 12A shows an example of non-optimal slot allocation.

FIG. 12B shows an example optimal slot allocation.

## DETAILED DESCRIPTION

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

3GPP TS 38.300 17.3.0, January 13, 2023

3GPP TR 36.750 14.1.0, March 23, 2017

3GPP TR 36.824 11.0.0, June 26, 2012

3GPP TS 38.214 18.1.0, January 18, 2024

3GPP TS 38.314 17.4.0, January 12, 2024

3GPP TS 38.321 18.0.0, January 12, 2024

*Acronyms*

3GPP: Third generation partnership project
5GC: 5G Core Network
5G NR: 5G New Radio
5QI: 5G QoS Identifier
ACK: Acknowledgement
AM: Acknowledged Mode
AMF: • Access and Mobility Management Function
AL: Aggregation Level
APN: Access Point Name
ARP: Allocation and Retention Priority
AUSF Authentication Server Function
BLER: Block Error Rate
BS: Base Station
CA: Carrier Aggregation
CC: Component Carrier
CP: Control Plane
CU: Centralized Unit
CU-CP: Centralized Unit - Control Plane
CU-UP: Centralized Unit - User Plane
C-RAN: cloud radio access network
CQI: Channel Quality Indicator
CSA: Channel State Information
CRC: cyclic redundancy check
DCI: Downlink Control Information
DL: downlink
DDDS: DL Data Delivery Status
DNN: Data Network Name
DRB: Data Radio Bearer
DU: Distributed unit
EPC: Evolved Packet Core
eNB: evolved Node B
GBR: Guaranteed Bit Rate
gNB: g NodeB
GTP-U: GPRS Tunnelling Protocol - User Plane
HARQ: Hybrid automatic repeat request
EN-DC
I-SCSF: Interrogating Service Call Session Control Function
IP: Internet Protocol
IoT: Internet of Things

L1: Layer 1
L2: Layer 2
L3: Layer 3
L4S: Low Latency, Low Loss and Scalable Throughput
LC: Logical Channel
MAC: Medium Access Control
MCS: Modulation and coding scheme
MIMO: multiple-in multiple-out
MU-MIMO: multiple-in multiple-out
MME: Mobility Management Entity
MR-DC: Multi-Radio Dual Connectivity
NACK: Negative Acknowledgement
NAS: Non-Access Stratum
NB: Narrowband
NR: New Radio
NR-U: New Radio - User Plane
NSSF: Network Slice Selection Function
O-RAN: Open Radio Access Network
PCF: Policy Control Function
P-CSCF: Proxy-Call Session Control Function
PDCCH: Physical Downlink Control Channel
PMI: Precoding matrix indicator
PRACH: Physical Random Access Channel
PUCCH: Physical Uplink Control Channel
PUSCH: Physical Uplink Shared Channel
PRB: Physical Resource Block
PDB: Packet Delay Budget
PDU: Protocol Data Unit
PDCP: Packet Data Convergence Protocol
PHY: Physical Layer
PSD: Power Spectral Density
QCI: QoS Class Identifier
QFI: QoS Flow Id
QoS : Quality of Service
QPSK: Quadrature Phase Shift Keying
RAT: Radio Access Technology
RDI: Reflective QoS Flow to DRB Indication
RI: Rank Indicator
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SIB2: System Information Block Type 2
S-GW: Serving Gateway
SCTP: Stream Control Transmission Protocol
S-SCSF: Service Call Session Control Function
SDAP: Service Data Adaptation Protocol
SN: Signal Node
SMF: Session Management Function
SR: Scheduling Request
TAS: Telephony Application Server
TCP: Transmission Control Protocol
TEID: Tunnel Endpoint Identifier
TTI: Transmission Time Interval
UE: User Equipment

UP: User plane
UM: Unacknowledged Mode
UL: Uplink
UPF: User Plane Function
VoNR: Voice over New Radio

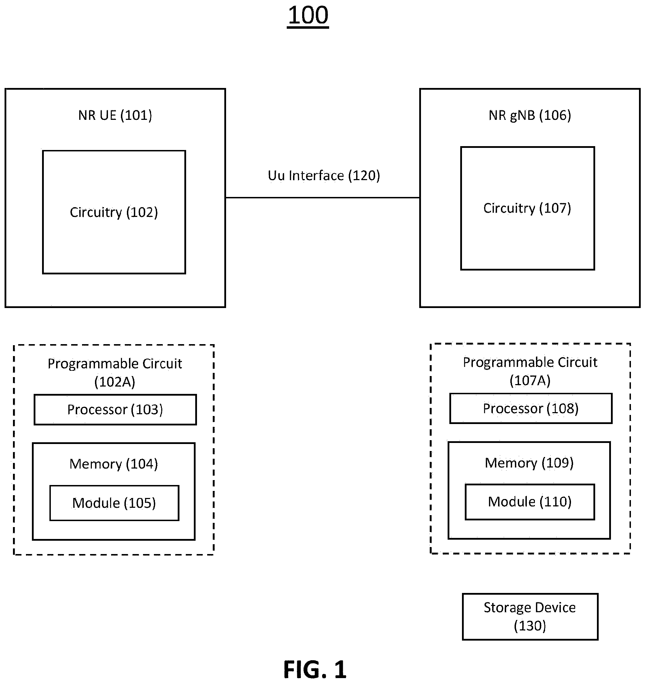

FIG. 1 is a block diagram of a system 100. System 100 includes a NR UE 101 and a NR gNB 106. The NR UE 101 and NR gNB 106 are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 includes instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit including multiple parallel hard drives, (g) a universal serial bus (USB) flash drive, (h) a random-access memory, and (i) an electronic storage device coupled to NR gNB 106 via a data communications network.

Uu Interface 120 is the radio link between the NR UE 101 and NR 106 gNB, which is compliant to the 5G NR specification.

UEs 101 can be dispersed throughout wireless communication network, and each UE 101 can be stationary or mobile. A UE 101 includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs 101 considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network (e.g., an LTE network) can be a narrowband bandwidth UE. As used herein, devices with limited communication resources, e.g. smaller bandwidth, are considered as narrowband UEs 101. Similarly, legacy devices, such as legacy and/or advanced UEs (e.g., in LTE) can be considered as wideband UEs 101. Wideband UEs are generally understood as devices that use greater amounts of bandwidth than narrowband UEs 101.

In some implementations, access to a wireless interface can be scheduled, wherein a scheduling entity (e.g.: BS) allocates bandwidth resources for devices and equipment within its service area or cell. As scheduling entity can be configured to schedule, assign, reconfigure, and release resources for one or more subordinate entities. BSs are not the only entities that can function as a scheduling entity. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

In an example, control information (e.g., scheduling information) can be provided for broadcast and/or multicast operation. The UE can monitor different bundle sizes for the control channel depending on the maximum number of repetitions.

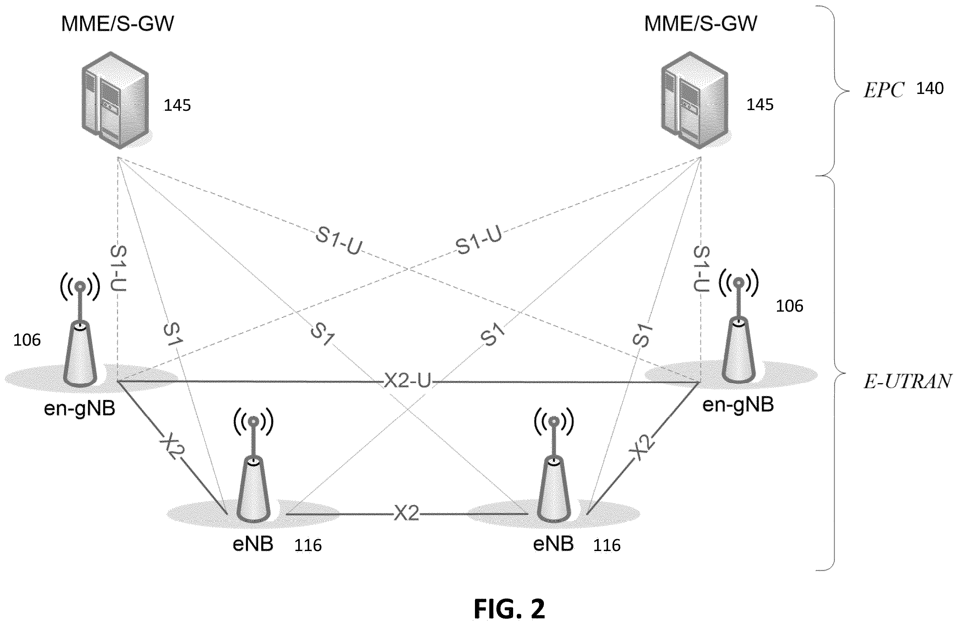

An E-UTRAN architecture is illustrated in FIG. 2. The E-UTRAN comprises eNBs 116, providing the E-UTRAN U-plane (PDCP/RLC/MAC/PHY) and control plane (RRC) protocol terminations towards the UE. The eNBs 116 are interconnected with each other by the X2 interface. The eNBs 116 are also connected by the S1 interface to the EPC (Evolved Packet Core) 140, more specifically to the MME (Mobility Management Entity) 145 by the S1-MME interface and to the Serving Gateway (S-GW) by the S1-U interface. The S1 interface supports a many-to-many relation between MMEs/Serving Gateways and eNBs 116.

E-UTRAN also supports MR-DC via E-UTRA-NR Dual Connectivity (EN-DC), in which a UE is connected to one eNB 116 that acts as a MN and one en-gNB 106 that acts as a SN. An EN-DC architecture is illustrated in FIG. 2. The eNB 116 is connected to the EPC 140 via the S1 interface and to the en-gNB 106 via the X2 interface. The en-gNB 106 might also be connected to the EPC 140 via the S1-U interface and other en-gNBs 106 via the X2-U interface. In EN-DC, an en-gNB 106 comprises gNB-CU and gNB-DU(s).

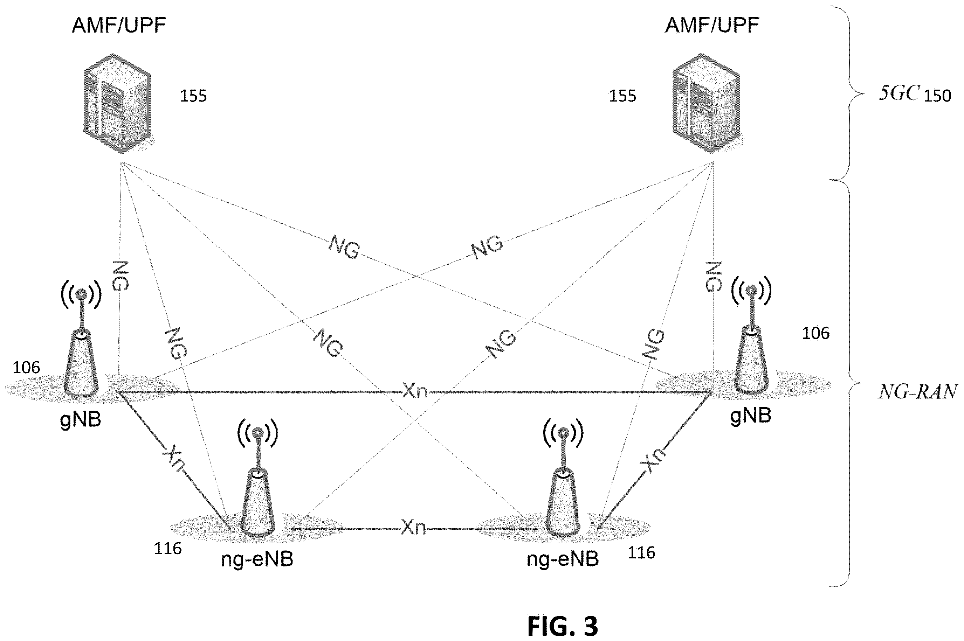

E-UTRAN also supports and NG-RAN architecture 150. An NG-RAN architecture 150 is illustrated in FIG. 3. An NG-RAN node is either:

a gNB 106, providing NR user plane and control plane protocol terminations towards the UE; or

an ng-eNB 116, providing E-UTRA user plane and control plane protocol terminations towards the UE. (3GPP TS 38.300 17.3.0.)

As shown in FIG. 3, the gNBs 106 and ng-eNBs 116 are interconnected with each other by the Xn interface. The gNBs 106 and ng-eNBs 116 are also connected by the NG interfaces to the 5GC 150, more specifically to the AMF (Access and Mobility Management Function) 155 by the NG-C interface and to the UPF (User Plane Function) 157 by the NG-U interface. The gNB 106 and ng-eNB 116 host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity. Tight interworking between NR and E-UTRA. NB-IoT UE is supported by ng-eNB 116.

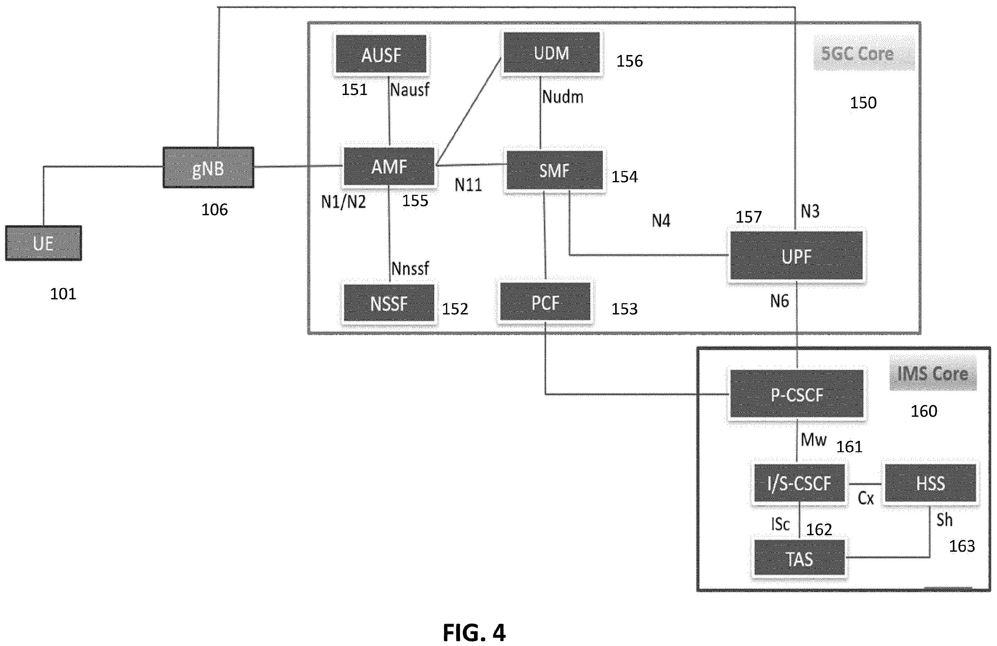

Voice over New Radio (VoNR) is the voice over IP service for 5G NR. VoNR interfaces with a 5G core 150 supporting IMS core 160 for voice support, a 5G RAN supporting VoNR, and a UE 101 supporting VoNR. FIG. 4 shows the 5G RAN 150-5GC-IMS 160 architecture. The 5G core 260 includes Authentication Server Function (AUSF) 151, Access and Mobility Management Function (AMF) 155, Network Slice Selection Function (NSSF) 152, Policy Control Function (PCF) 153, Session Management Function (SMF) 154, Unified Data Management Function, 156, and User Plane Function (UPF) 157.

The IMS Core 160 includes Proxy-Call Session Control Function (P-CSCF)161, Interrogating and Service Call Session Control Functions (I/S CSCF) 162. The S-CSCF 162 interacts with other network elements such as the Home Subscriber Server (HSS) 163 and Application Servers such as Telephony Application Server(TAS) 164.

**PDU Session procedures for VoNR**

From RAN perspective to setup a voice call, two QCI flows/bearers are to be established by a gNB 106 CU-CP. A first bearer is to carry the IMS signaling with (5QI=5, NGBR, PDB=100ms, with $10^{-6}$ PER ) and a second bearer is to carry the voice packet (5QI=1, GBR, PDB=100ms, with 1% BLER) every 20/40ms. One of the QoS flows support the IMS signaling (5QI=5) and the other QoS flow supports the voice traffic (5QI=1).

Once UE 101 registration is completed, a new PDU session is created for IMS signaling (with 5QI=5). Afterwards, whenever MO-voice (or) MT-voice is triggered for the UE 101, new QoS flow (5QI=1) is to be created. Once the voice call is released, 5QI=1 QoS flow/radio bearer is to be released and 5QI=5 QoS flow/radio bearer is retained.

Typically, VoNR packets are small, in the range of 200-600+ bits. UEs 101 get one small allocation for a packet (or two packets) of 200-600 bits (1200 bits) every 20/40ms in DL/UL which includes one PDCCH usage and one PDSCH or PUSCH usage. Also, in some implementations, link adaptation and power control algorithms are adapted for 1% BLER for the first transmission. Jitter is one aspect that determines the QoE of a VoNR session which, while tolerable up to 30ms, can have a much lower value. Resources are allocated either through dynamic scheduling or proactive grants or in a semi persistent way. It is also noted that retransmission with feedback is used to improve reliability but worsens the jitter.

**Cell edge UE**

Cell edge UEs 101 are UEs 101 that are transmitting at or near full power (e.g. 23 dBm with PC3 capability) due to high pathloss in the gNB- UE link. These UEs 101 are far away from gNB 106, or deep indoors. Cell edge UEs 101 typically see a high BLER in UL and also require higher aggregation level for PDCCH. Some of these UEs 101, which usually transmit with QPSK modulation, do not have enough power to transmit more than few resource blocks. To transmit a VoNR packet, the transport block (TB) size, which is a function of resources (i.e., PRBs allocated), uses a MCS for transmission should be greater than the packet payload and headers.

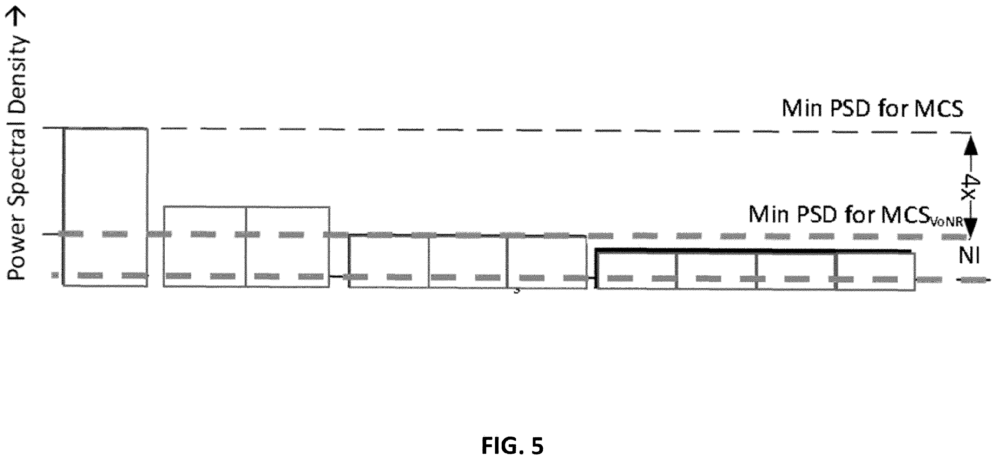

FIG. 5 is an illustration of a power per resource block/power spectral density (PSD) for a power limited UE 101 for grant with different RB sizes 1,2,3 and 4. When a power limited UE 101 uses more PRBs, the power per RB/power spectral density of the transmission decreases. Sometimes PSD goes below a minimum power spectral density (Min PSD) required for certain MCSs.

As noted above, if the cell edge UE 101 does not have sufficient power to transmit one VoNR packet and headers in a slot, it is very challenging for a cell edge UE 101 to do a VoNR call>. The UE 101 cell edge call is also very demanding for the network.

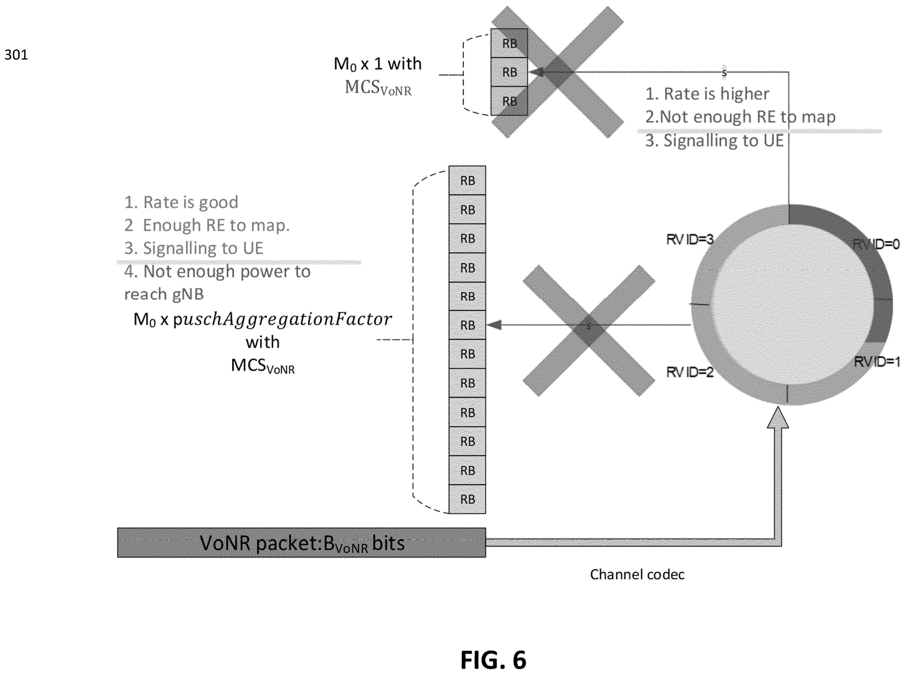

FIG. 6 is a flow chart and infographic showing the issues for power limited cell edge UE 101, with different grant sizes. As shown in FIG. 6, smaller allocation requires higher MCS to send a VoNR packet without segmentation - which reduces the reliability. Higher PRB allocation requires the UE to reduce power per RB, resulting in MCS reduction and reliability reduction, again forcing UE to segment packet.

In NR, there are two ways of tackling this problem:

1. Rely on HARQ retransmissions to get the packet through.

2. Segment the packet into two or more packets and transmit.

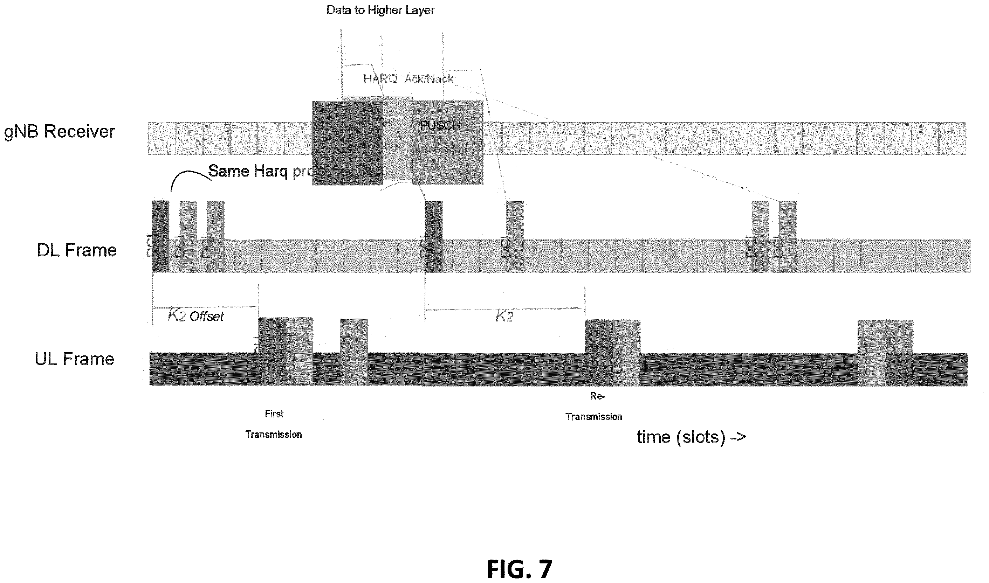

FIG. 7 is an illustration showing segmenting and retransmissions. Retransmission often results in higher delay and jitter. Both methods have drawbacks. HARQ retransmission is taxing on PDCCH resources, as in NR HARQ retransmission is adaptive and asynchronous, and each retransmission consumes PDCCH resources at higher rates than a typical UE. Additionally, each retransmission typically occurs with a delay of 8ms, which adds to the jitter, and thus QoE suffers. Segmenting the packet can be better in terms of jitter, but segmenting has a high PDCCH resource overhead, higher PUSCH overhead including higher header overheads in form of RLC, MAC headers and transport block CRC. Also, the small TB size means lower coding gain, which results in more resource wastage.

*Table 1:TB size for VOIP packet with different aggregations in 3GPP TS36.750*

| Codec | RAN aggregation | Application encapsulation | Payload | RTP header (ROHC) | PDCP | RLC | MAC | BSR | PHR | Inter tx time (ms) | Total (bytes) | TBS (bits) |
|---|---|---|---|---|---|---|---|---|---|---|---|---|
| EVS 7.2kbps | 1 | 1 | 18 | 3 | 2 | 2 | 1 | 4 | 2 | 20 | 32 | 256 |
| EVS 7.2kbps | 2 | 1 | 18*2 | 3*2 | 2*2 | 4 | 1 | 4 | 2 | 40 | 57 | 456 |
| EVS 7.2kbps | 3 | 1 | 18*3 | 3*3 | 2*3 | 5 | 1 | 4 | 2 | 60 | 81 | 648 |
| EVS 7.2kbps | 4 | 1 | 18*4 | 3*4 | 2*4 | 7 | 1 | 4 | 2 | 80 | 106 | 848 |
| EVS 7.2kbps | 1 | 2 | 19*2 | 3 | 2 | 2 | 1 | 4 | 2 | 40 | 52 | 416 |

(continued)

| Codec | RAN aggregation | Application encapsulation | Payload | RTP header (ROHC) | PDCP | RLC | MAC | BSR | PHR | Inter tx time (ms) | Total (bytes) | TBS (bits) |
|---|---|---|---|---|---|---|---|---|---|---|---|---|
| EVS 7.2kbps | 1 | 3 | 19*3 | 3 | 2 | 2 | 1 | 4 | 2 | 60 | 71 | 568 |
| EVS 7.2kbps | 1 | 4 | 19*4 | 3 | 2 | 2 | 1 | 4 | 2 | 80 | 90 | 720 |

As such, VoNR, being limited on resources, is challenging for UEs 101 at the cell edge.

### Slot Aggregation for NR

Slot aggregation, also referred as multi-slot transmission, is used in NR for coverage limited UE 101. Slot aggregation includes one grant from gNB 106 followed by 1,2,4 or 8 transmissions in UL or DL in consecutive slots, followed by one HARQ feedback from receiver. For simplicity and familiarity, these transmissions are referred to as a bundle. The number of repetitions in a bundle is called an AggregationFactor. NR uses adaptive and asynchronous retransmission, thus allowing multiple bundle retransmissions. Slot aggregation is enabled by RRC configuration that includes AggregationFactor(s) configured for the UE 101. This feature is signaled as part of a BWP configuration and thus can be disabled or modified by switching BWP. Also, this feature can be used together with SPS in DL and Configured Grant in UL. Further, the number of repetitions for each bundle can be indicated by DCI.

Slot aggregation can be used for VoNR, and Video over NR (ViNR), where packets are repetitive, and typically happen at every 20/40 milliseconds. Some of the key challenges are to minimize jitter (to ensure timely delivery of voice/video packets) and to reliably deliver the packets in the uplink of cell edge UEs 101. It is shown in 3GPP TS 36.824 that bundling is beneficial for medium data rates (384 Kbps) UEs 101 also.

### Link adaptation for VoNR and issues at cell-edge

In general, a VoNR UE is scheduled with a more conservative MCS as compared to UEs doing data. This is to ensure BLER is lower thus reducing jitter and latency. A Link adaptation and Resource allocation module provides a grant sufficient for a buffer status report (BSR) requirement of the VoNR UE - which is good enough for transmitting a VoNR packet without segmentation - by allocating several PRBs. For a low MCS cell-edge power limited UE 101, the algorithm cannot allocate PRBs beyond a limit due to the UE transmit power constraints. Transmitting over a greater number of PRBs results in lower power per RB, and thus the packet reception at eNB fails due to a CRC error. Transmitting with a lower number of PRBs means the transport block size is less than data buffer occupancy (BO) reported by UE in a Buffer status report (BSR) , thus resulting in segmentation of packets. This is true even in case UE 101 is doing slot aggregation, where multiple repetition allows the gNB 106 to receive packets more reliably. Algorithms such as outer loop link adaptation can adapt over time to avoid the segmentation issues by improving MCS, but in practice they are too slow to adapt. So, there is need for enhanced Link adaptation algorithms.

### Implementations for Slot aggregation

*MCS boosting for UL slot aggregation to avoid segmentation*

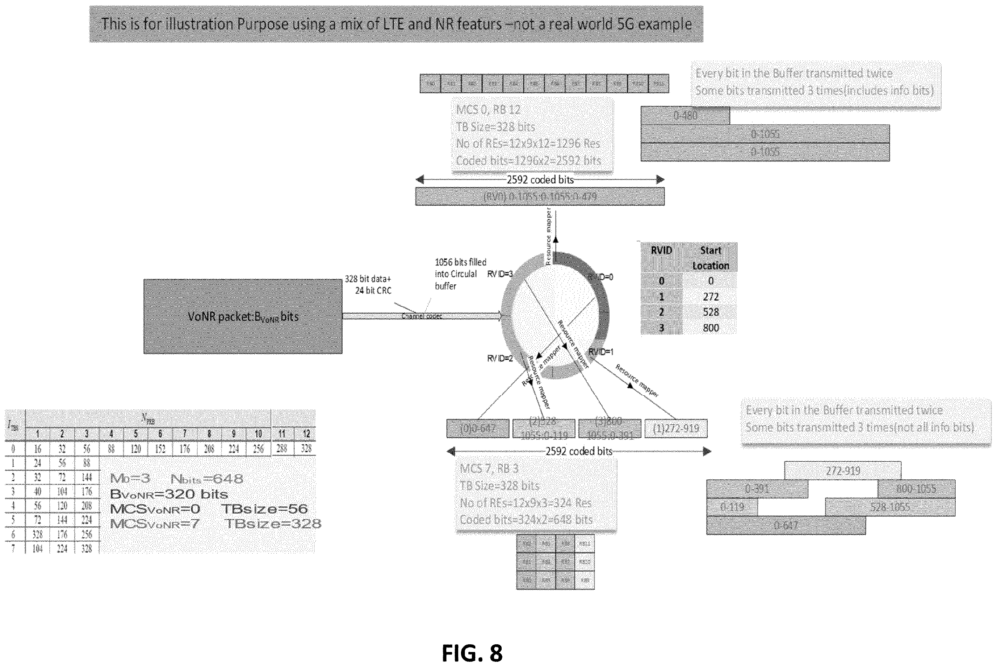

In an implementation, a link adaptation and resource allocation module is configured for MCS boosting for UL slot aggregation to avoid segmentation. FIG. 8 is an illustration of mapping of encoded bits to REs across slots with normal HARQ repetition and repetition as part of slot aggregation. They have the same number of REs, therefore have the same capacity to take coded bits even though the order of mapping is different. The link adaptation and resource allocation module is configured to allocate resources in both time (K Slots) and frequency domain (M PRBs) for a UE doing slot aggregation. In the frequency domain, the allocation is M PRBs in a slot, with the total number of PRBs given to the UE 101 is K x M per bundle. The total number of PRBs and thus resource elements available across K slots is the same as a single grant with K x M PRB allocation. This allows transmission of same number of encoded bits, though in different order compared to a single bigger allocation, as shown in FIG. 8. The transport block, that can be transmitted with multi-slot allocation K slots x M PRBs with a modulation and coding scheme $MCS_i$ decided by a link adaptation algorithm of the link adaptation and resource allocation module, is the same as a single slot allocation of K x M PRBs with $MCS_i$, which is greater than K times the transport block size of M PRB allocation with $MCS_i$ in most scenarios.

In wireless systems such as LTE and NR, however, the gNB 106 indicates to UE 101 the grant size (transport block size) in terms of a function $TBsize$ ($MCS_{dci}$, $PRB_{dci}$) together with common understanding of overheads, where $MCS_{dci}$ is the modulation coding scheme (MCS) and $PRB_{dci}$ is the number of PRBs allocated to UE, which are signaled as part of downlink control information (DCI). For NR, the $TBsize$ ($M$, $P$) function is defined in "3GPP TS 38.214 section 6.1.4 Modulation order, redundancy version and transport block size" determination.

Disclosed is an implementation to convey a higher TB size to the VoNR UE 101 so that the VoNR UE 101 can send the VoNR packet without segmentation in a multi slot transmission. The VoNR UE 101 sends same encoded packet each slot with different redundancy versions. Some of the initial transmission of the multi-slot bundle transmission can result in CRC failures at the gNB 106 receiver, but once more receptions happen, and code rate is reduced to a level the channel supports, the packet is successfully decoded in the gNB 106. At the last slot of multi-slot transmission, gNB 106 decodes the packet successfully with more than 99% probability. To that end, the $MCS_{dci}$ is configured to be signaled to UE 101 as follows.

The UE 101 is required to send X bits in UL, where X corresponds to size of one or two VoNR packets as payload and overheads including RoHC, PDCP, RLC, MAC headers, an optional BSR, and an optional power head room (PHR) report. X is also referred as BSR requirement for VoNR UE. For transmission with K repetition, the $MCS_{dci}$ to be signaled can satisfy the following condition.

*Condition for $MCS_{dci}$*

1. X shall be less than or equal to computed transport block size with signalled $MCS_{dci}$, signalled number $PRB_{ddi}$ (i.e. $TBsize(MCS_{dci}, PRB_{dci})$)

2. The computed transport block size shall be less than or equal to the max supported transport block size computed with the MCS calculated by link adaption algorithm for UE $MCI_i$ and allocation size of K times signalled PRBs: $K \times PRB_{dci}$ ($TBsize(MCI_i, K \times PRB_{dci})$ )

$$X \leq TBsize(MCS_{dci}, PRB_{dci}) \leq TBsize(MCI_i, K \times PRB_{dci})$$

where $TBsize(R, P)$ is a function to determine transport block size as defined in 3GPP TS 38.314 section for MCS 'R' and 'P' PRBs. $PRB_{dci}$, is decided by the link adaptation algorithm based on UE transmit power, pathloss of link, and so on. K is the number of repetitions in a multi-slot transmission.

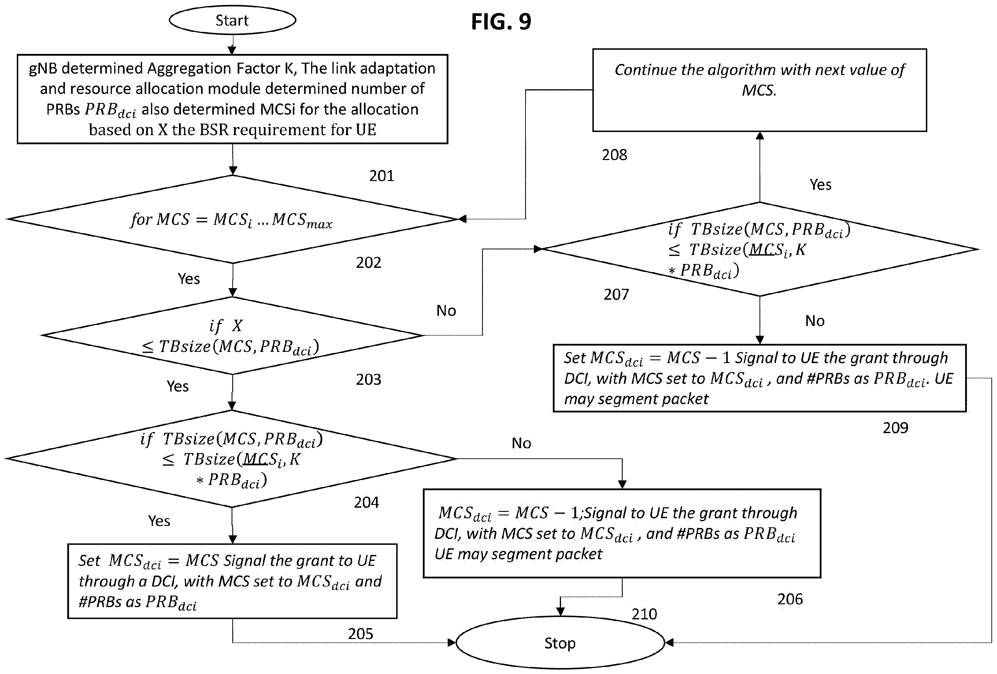

FIG. 9 shows a method for identifying $MCS_{dci}$. As shown in FIG. 9, in an implementation, starting at block 202 the gNB 106 can increment the MCS from $MCS_i$ to $MCS_{max}$ as shown below.

At block 201, for the MCS, the gNB 106 determines the transport block size with signaling PRBs $TBsize(MCS, PRB_{dci})$.

When the transport block size satisfies both condition 1 at block 203 and condition 2 at block 204 for $MCS_{dci}$ given above, then at block 205 the MCS is set as $MCS_{dci}$. The grant is signaled to UE 101 through a DCI, with MCS set to $MCS_{dci}$, and #PRBs as $PRB_{dci}$. At block 210 the process stops and exits.

In case condition 1 satisfied at block 203 but condition 2 fails at block 204, and at block 207 if the transport block size with a MCS is greater than the max supported transport block size, then at block 209 gNB 106 gives a smaller allocation to the UE 101 than required for X bits by setting $MCS_{dci} = MCS - 1$. The UE 101 is signaled the grant through DCI, with MCS set to $MCS_{dci}$, and #PRBs as $PRB_{dci}$. Then at block 210, the process stops and exits. Note that the UE 101 can segment the packet in this case.

If at block 203 condition 1 fails, that is, at block 20 the computed transport block is less than required X bits and supported transport block size, the gNB 106 increments the MCS at block 208 and the algorithm continues with a next value of MCS and starts again at block 202.

In case both condition 1 fails at block 203 and condition 2 fails at block 204, at block 206 gNB 106 gives a smaller allocation to the UE than required for X bits by setting $MCS_{dci} = MCS - 1$. The grant through DCI is signaled to the UE 101, with MCS set to $MCS_{dci}$, and #PRBs as $PRB_{dci}$. Then at block 210 the process stops and exits. Note: UE can segment the packet in this case.

The algorithm for the process shown in FIG. 9 can be expressed as follows.

*for* $\mathrm{MCS} = \mathrm{MCS_i} \ldots \mathrm{MCS_{max}}$ *{*

if $\mathrm{X} \leq \mathrm{TBsize(MCS, PRB_{dci})}${

if $\mathrm{TBsize(MCS, PRB_{dci})} \leq \mathrm{TBsize(MCS_i, K * PRB_{dci})}$ {

*Set* $\mathrm{MCS_{dci}} = \mathrm{MCS}$

*Signal the grant to UE through a DCI, with MCS set to* $\mathrm{MCS_{dci}}$ *, and #PRBs as* $\mathrm{PRB_{dci}}$

*Exit the algorithm.*

*}*

else *{*

if $\mathrm{TBsize(MCS, PRB_{dci})} > \mathrm{TBsize(MCI_i, K * PRB_{dci})}${

*There is no* $\mathrm{mcs_{dci}}$ *exit to send the packet that is within channel capacity.*

*Set* $\mathrm{MCS_{dci}} = \mathrm{MCS} - 1$

*Signal to UE the grant through DCI, with MCS set to* $\mathrm{MCS_{dci}}$ *, and #PRBs as* $\mathrm{PRB_{dci}}$

*Exit the algorithm.*

*Note: in this case, it may not be possible to fulfil UEs BSR, so UE may send segments.*

*}*

*}*

else { // if $\mathrm{X} > \mathrm{TBsize(MCS, PRB_{dci})}$

if $\mathrm{TBsize(MCS, PRB_{dci})} < \mathrm{TBsize(MCI_i, K * PRB_{dci})}$ {

*Continue the algorithm with next value of MCS.*

*}*

else *{*

if $\mathrm{TBsize(MCS, PRB_{dci})} > \mathrm{TBsize(MCI_i, K * PRB_{dci})}${

*There is no* $\mathrm{mcs_{dci}}$ *exit to send the packet without segmentation.*

*Set* $\mathrm{MCS_{dci}} = \mathrm{MCS} - 1$

*Signal to UE the grant through DCI, with MCS set to* $\mathrm{MCS_{dci}}$ *, and #PRBs as* $\mathrm{PRB_{dci}}$

*Exit the algorithm.*

*Note: in this case it may not be possible to fulfill UEs BSR, so UE may send segments.*
*}*
*}*
*}*

In addition, to reduce the search for $MCS_{dci}$ a configurable minimum value e.g. MCS= 5 or MCS=8 can be specified based on expected VoNR packet size and minimum MCS of the UE and number of repetitions, and so on.

*Changing number of repetitions*

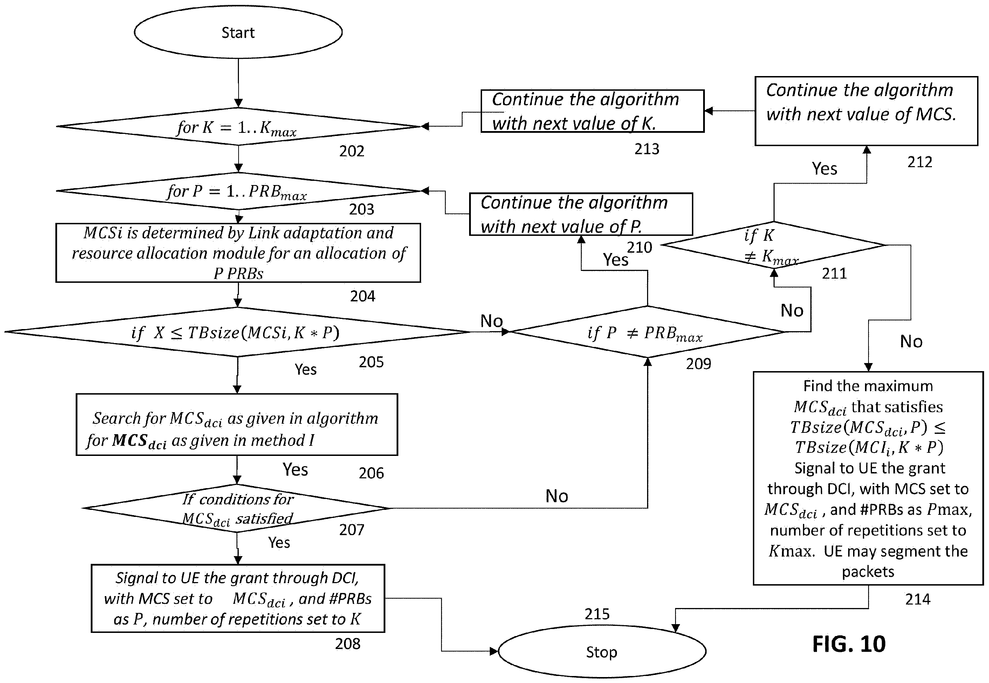

FIG. 10 shows another method for an additional implementation of the process including changing the number of repetitions. In this additional implementation, the number of repetitions (K), that is, slots in multi-slot transmission, can be changed. K can take values from a predefined set, for example, {1,2,4,8} or {1,2,3,4,7,8,12,16}. In this method, optimized values for $MCI_{dci}$, K, $PRB_{ddi}$ are found that satisfy the UE BSR requirement (X) which also satisfy the conditions 1 and 2. FIG. 13 is a flow diagram depicting this method.

$$X \leq TBsize(MCS_{dci}, PRB_{dci}) \leq TBsize(MCI_i, K * PRB_{dci})$$

The method is as follows, a UE 101, with max PRB allocation $PRB_{max}$, maximum repetition is $K_{max}$, where $PRB_{max}$ and $K_{max}$ are configurable values.

At block 202, the gNB 106 increments the K from 1 to $K_{max}$ as per the predefined sets given above. At block 203, for each value of K, the gNB 105 increases the allocated PRBs 'P' from 1 to $PRB_{max}$,

At block 204, for the $MCI_i$, and K repetitions, and P PRBs, the gNB 106 determines the max transport block size $TBsize(MCI_i, K * P)$. It will be noted that the Link adaptation and resource allocation module determines the MCS $MCSi$ for the 'P' PRB allocation.

At block 205, if X is less than or equal to the max supported transport size of the UE for P PRBs. At block 206, the gNB searches for $MCS_{dci}$ as given in the algorithm shown above with respect to FIG. 9 for $MCS_{dci}$ above.

At block 207, when the transport block size satisfies both condition 1 and condition 2 for $MCS_{dci}$ given above, then the $MCS$ will be set as $MCS_{dci}$. At block 208, the grant to UE 101 is signaled through a DCI, with MCS set to $MCS_{dci}$, and #PRBs as $PRB_{dci}$. At block 215, the process stops and exits.

At block 205 in case the condition for $MCS_{dci}$ is not satisfied and at block 209 P is less than $PRB_{max}$., at block 210, the gNB 106 increments the PRBs P by one, and goes to block 203.

At block 205 in case the condition for $MCS_{dci}$ is not satisfied, but at block 209 P is equal to $PRB_{max}$, and at block 211 K is less than $K_{max}$, at block 212 the gNB 106 continues the algorithm with next value of MCS. At block 213 increment K to next value possible value from the set, set P equal to 1 and go to block 202.

At block 205, in case the condition for $MCS_{dci}$ is not satisfied, but at block 209 P is equal to $PRB_{max}$, and at block 211 K is equal to $K_{max}$, at block 214 the maximum $MCS_{dci}$ is identified such that transport block size with P PRBs $TBsize(MCS_{dci}, P)$ is less than or equal to the max transport block size $TBsize(MCI_i, K * P)$. The grant to the UE101 is signaled through DCI, with MCS set to $MCS_{dci}$, and #PRBs as P, number of repetitions set to K. It will be noted that in this case, the UE 101 sends a segmented packet as BSR requirement is not satisfied. At block 215, the process stops and exits. The algorithm for the process shown in FIG. 10 can be expressed as follows.

$for\ K = 1 .. K_{max}$

$for\ P = 1 .. PRB_{max}$

$MCSi$ is determined by Link adaptation and resource allocation module for an allocation of P PRBs

$if\ X\ \leq\ TBsize(MCI_i, K * P)\{$

Search for $MCS_{dci}$ as given in algorithm for $\boldsymbol{MCS_{dci}}$ above.

$if\ MCS_{dci}\ exists\ \{\ //$conditions for $MCS_{dci}$ is satisfied

Signal to UE the grant through DCI, with MCS set to $MCS_{dci}$, and #PRBs as $P$, number of repetitions set to $K$.

Exit the algorithm.

}

$else\{$

$if\ P\ \neq\ PRB_{max}$

Continue the algorithm with next value of P.

}

$else\ \{$

$$if\ K \neq K_{max}$$

Continue the algorithm with next value of K.

}

}

$$else$$

{

$$if\ K == K_{max}\ \&\ P == PRB_{max}$$

Find the maximum $MCS_{dci}$ that satisfies $TBsize(MCS_{dci}, P) \leq TBsize(MCI_i, K * P)$

Signal to UE the grant through DCI, with MCS set to $MCS_{dci}$, and #PRBs as $Pmax$, number of repetitions set to $Kmax$.

Note: In this case UE will send segmented packet as BSR requirement is not satisfied.

Exit the algorithm.

}

*Method to reduce scheduler complexity for resources allocations*

When multi-slot scheduling grant is given to UE 110 that grant is valid for K slots, the gNB 106 marks these resources as used in other slots also and does not allow any other UE 101 to transmit in those slots. This is accomplished by giving a very high scheduler priority to UEs 101 allocated with slot aggregation. Also, the scheduler reserves the PRBs in the upper edge of the BW, so that lower edge PRBs are given to normal users. Similarly, the scheduler can pack more UEs 101, increase the capacity of system in a slot/radio frame, and so on. The scheduler can put limits *P_max* and *K_max.* For eg. *P_max* = 4 *or* 5 *PRBs* & *K_max* = 4, which can be used in some scenarios. Scheduler also can specify a minimum PRB allocation (e.g.: minimum allocation can be 3 PRBs).

To avoid PRACH allocation on lower RBs, upper edge RBs can be allocated to slot aggregated UEs 101. In case of PRACH allocation is in upper edge RBs, then slot aggregated UEs 101 are allocated at the lower most PRBs and normal UEs 101 are allocated at upper edge PRBs.

*Smart allocation for UL Slot aggregation with inter-slot frequency hopping*

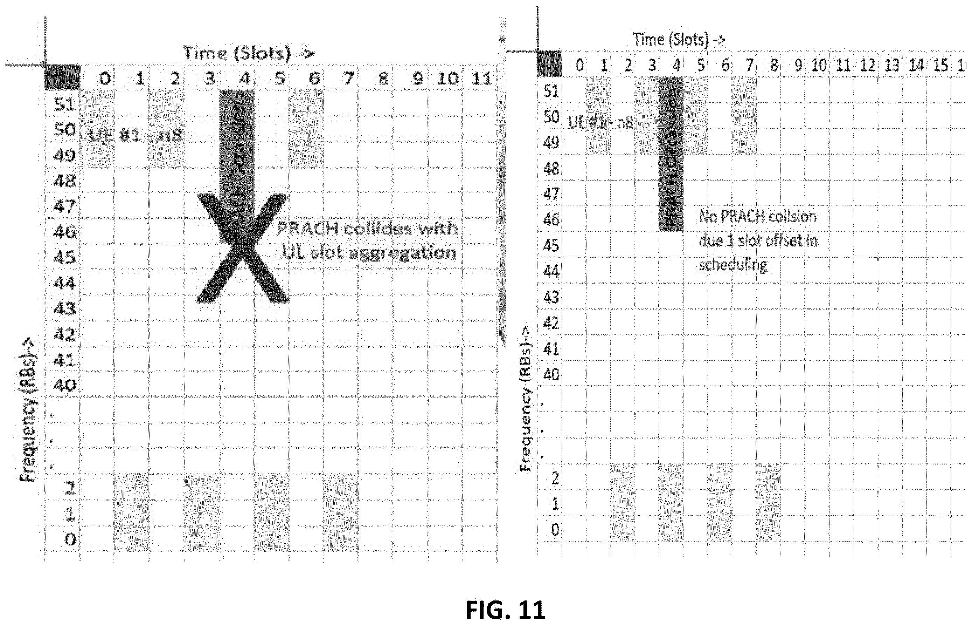

In case of slot aggregated UEs 101 doing inter slot hopping, to avoid allocation overlapping PRACH in a slot, the following method can be used. FIG. 11 shows an example of PRACH and slot aggregation.

If PRACH is on an even subframe Lower PRBs- Multi slot schedules a new transmission on even slot upper PRBs;

If PRACH is on an even subframe Upper PRBs - Multi slot schedules a new transmission on an odd slot upper PRBs;

If PRACH is on an odd subframe Lower PRBs -Multi slot schedules a new transmission on odd slot upper PRBs; and

If PRACH is on odd subframe Upper PRBs -Multi slot schedules new transmission on even slot upper PRBs.

*Optimized packing for multi-UE scenario*

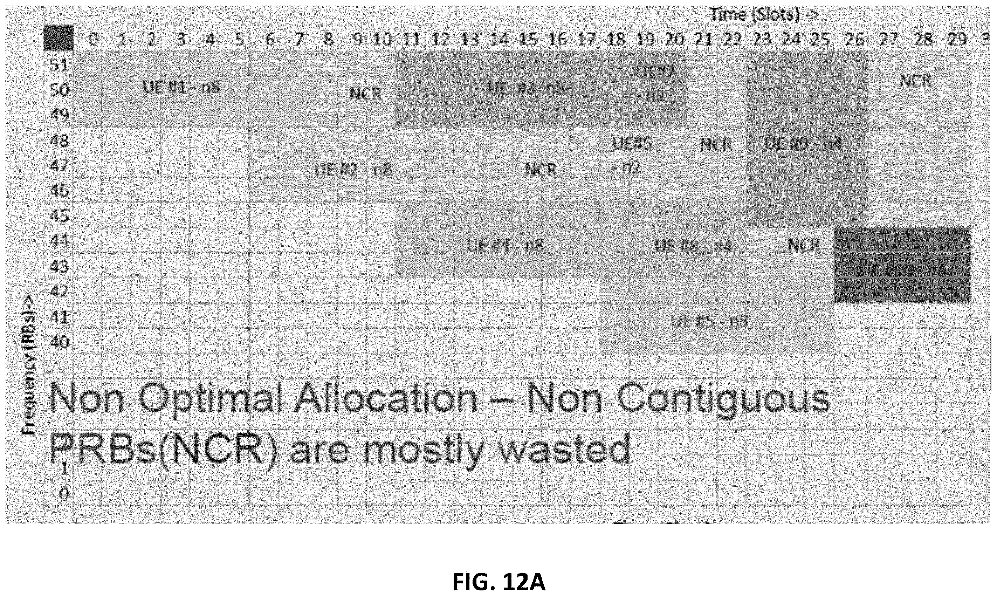

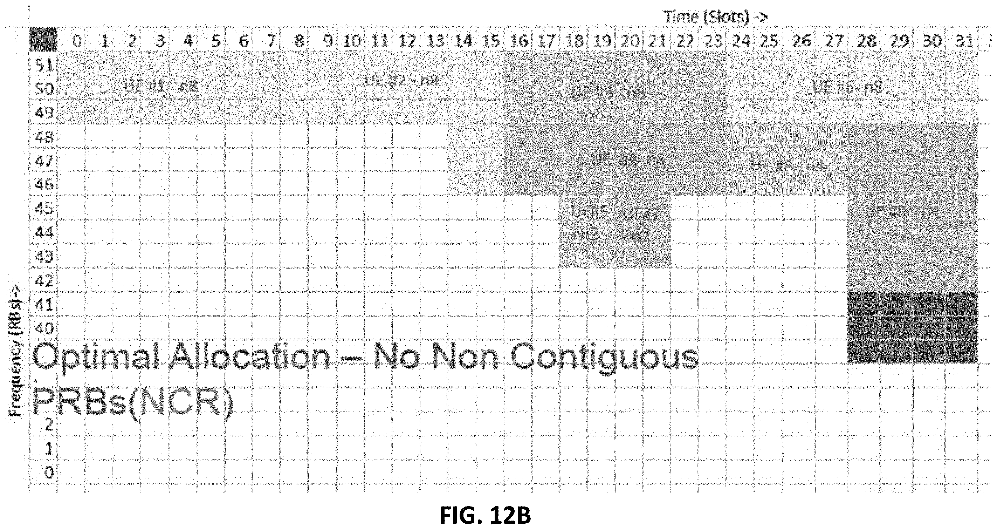

FIG. 12A shows an example of non-optimal slot allocation. FIG. 12B shows an example of an optimal slot allocation. As shown in FIG. 12B:

To increase the PUSCH capacity (to reduce wastage), Schedule higher Aggregation UEs first as follows. Higher AggregationFactor UE have high Priority if the P_LC is multiplied by AggregationFactor. For UE selection the UE priority is calculated as follows:

$$P\_UE = P\_LC*AggregationFactor+ P\_GBR + P\_PF$$

Where P_LC: Priority based on QoS i.e. 5QI

Slot Aggregation applies when 5QI=1 (VoNR), When 5QI!=1 then AggregationFactor=1
P_GBR: Priority calculated based on GBR metric.
P_PF: Priority calculated based on fairness metric.

Schedule higher Aggregation UE - if and only if *slot number* % AggregationFactor= 0 Alternatively, the UE selection the UE priority is calculated as follows:

$$P\_UE = (P\_LC + P\_GBR + P\_PF) *AggregationFactor.$$

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

**Claims**

1. A system comprising:
   a New Radio (NR) base station comprising a link adaptation and resource allocation module configured to allocate resources in both time (K slots) and frequency domain (M Physical Resource Block (PRB)s) for a UE doing slot aggregation, the allocation comprising;

   in the frequency domain, the allocation is M PRBs in a slot, with the total number of PRBs given as K x M; and a total number of PRBs available across the K slots is same as a single grant with the K x M PRB allocation; so that a transport block can be transmitted with multi-slot allocation the K slots x the M PRBs with a modulation and coding scheme ($MCI_i$) decided by a link adaptation algorithm of the a link adaptation and resource allocation module, the link adaptation algorithm deciding a same allocation as a single allocation of the K x M PRBs with the $MCI_i$, and which is greater than K times a size of the transport block of an M PRB allocation with $MCI_i$.

2. The system of claim 1, comprising:

the link adaptation and resource allocation module of the base station being configured to, when executed by the processor, convey a higher TB size to a UE so that the UE can send a Voice over New Radio (VoNR) packet without segmentation in a multi slot transmission, the UE being configured to send the same encoded packet to each slot with different redundancy versions;

wherein the system is configured so that some of the initial transmission of the multi-slot bundle transmission results in cyclic redundancy check (CRC) failures at a receiver of the base station, however once more receptions of the transmission happen, and a code rate is reduced to a level a channel supports, the VoNR packet is successfully decoded in the base station; and

at a last slot of the multi-slot transmission, the base station decodes the VoNR packet successfully with more than 99% probability.

3. The system of claims 1 or 2, wherein a modulation and coding scheme (MCS) downlink control information ($MCS_{dci}$) is configured to be signaled to the UE; and
the UE is configured to send:

X bits in an uplink (UL), where X corresponds to size of one or two VoNR packets as a payload; and
the $MCS_{dci}$ when meeting an $MCS_{dci}$ condition.

4. The system of claim 3, wherein the $MCS_{dci}$. condition comprises:

condition 1) X being less than or equal to computed transport block size with a signaled $MCS_{dci}$, signalled number $PRB_{ddi}$ ( $TBsize(MCS_{dci}, PRB_{dci})$ ); and
condition 2) the computed transport block size being less than or equal to a max supported transport block size computed with the MCS calculated by the link adaption module for UE $MCI_i$ and allocation size of N times signaled PRBs, where

$$N \times PRB_{dci} \left( TBsize(MCI_i, K \times PRB_{dci}) \right)$$

$$X \leq TBsize(MCS_{dci}, PRB_{dci}) \leq TBsize(MCI_i, K \times PRB_{dci});$$

where $TBsize(R, P)$ is a function to determine a predefined transport block size for MCS 'R' and 'P' PRBs; $PRB_{dci}$ is decided by the link adaptation and resource allocation module based on UE transmit parameters; and K is the number of repetitions in a multi-slot transmission.

5. The system of claim 4, wherein the system is configured to execute a method for finding $MCS_{dci}$ comprising:

the base station configured to increment the $MCS$ from $MCS_i$ to $MCS_{max}$ by at least:

a) for the MCS, determine the transport block size with signaling PRBs $TBsize(MCS, PRB_{dci})$;
b) if the transport block size satisfies both condition 1) and condition 2) for $MCS_{dci}$, set the $MCS$ as $MCS_{dci}$. and signal the grant to the UE through a DCI, with MCS set to $MCS_{dci}$, and #PRBs as $PRB_{dci}$;

if condition 1) satisfied but condition 2) fails, where the transport block size with a $MCS$ is greater than the max supported transport block size, then the base station allocates a smaller MCS to the UE than required for X bits by setting $MCS_{dci}$ = $MCS$ - 1 and signals the grant to the UE through DCI, with MCS set to $MCS_{dci}$, and #PRBs as $PRB_{dci}$;
if condition 1) fails and the computed transport block is less than required X bits and a supported transport block size, increment the MCS and go to a);
if both condition 1) and condition 2) fail, the base station is configured to give a smaller allocation to the UE than required for X bits by setting $MCS_{dci}$ = $MCS$ - 1, and the grant through downlink control information (DCI) is signaled to the UE, with MCS set to $MCS_{dci}$, and #PRBs as $PRB_{dci}$.

6. The system of claim 5, wherein the UE is configured to segment the packet when the grant through DCI, with MCS set to $MCS_{dci}$, and #PRBs as $PRB_{dci}$ is signaled for when condition 1) satisfied but condition 2) is failed, or if the grant for both condition 1) and condition 2) fails.

7. The system of claim 4, wherein, to reduce the search for $MCS_{dci}$, the system is configured to specify a configurable minimum MCS value based on expected VoNR packet size and minimum MCS of the UE and number of repetitions.

8. The system of claim 5, wherein the system is configured to find $MCS_{dci}$, by at least:
changing the number of repetitions K slots in multi-slot transmission, whereby K can take values from a predefined set, and optimized values for $MCI_{dci}$, $K$, $PRB_{dci}$ are found that satisfy the UE BSR requirement X which also satisfy the conditions 1) and 2):

$$X \leq TBsize(MCS_{dci}, PRB_{dci}) \leq TBsize(MCI_i, K * PRB_{dci})$$

9. The system of claim 8, comprising:
the base station being configured to increment the K from 1 to $K_{max}$ as per the predefined set, where for each value of K, increase allocated PRBs 'P' from 1 to $PRB_{max}$, wherein MCS $MCS_i$, max PRB allocation $PRB_{max}$, maximum repetition is $K_{max}$, where $PRB_{max}$ and $K_{max}$ are configurable values.

10. The system of claim 8, wherein the system is configured to at least:

(a1) for the $MCI_i$, and K repetitions, and P PRBs determine the max transport block size $TBsize(MCI_i, K * P)$;
(b1) if X is less than or equal to the max supported transport size of the UE for P PRBs, search for $MCS_{dci}$ as given in feature 5for $MCS_{dci}$;
(c1) if the transport block size satisfies as given in feature 5for $MCS_{dci}$, then set the $MCS$ as $MCS_{dci}$ and signal the grant to UE through a DCI, with MCS set to $MCS_{dci}$, and #PRBs as $PRB_{dci}$;
(d1) if condition for $MCS_{dci}$ is not satisfied and P is less than $PRB_{max}$,increment the PRBs P by one, and go to (a); and
(e1) if for $MCS_{dci}$ is not satisfied, but P is equal to $PRB_{max}$, and $K$ is less than $K_{max}$ increment K to next value possible value from the set and go to step (a1); and
(f1) if the condition for $MCS_{dci}$ is not satisfied, but P is equal to PRB_max, and $PRB_{max}$, and $K$ is equal to $K_{max}$, identify the maximum $MCS_{dci}$ so that the transport block size with P PRBs $TBsize(MCS_{dci}, P)$ is less than or equal to the max transport block size $TBsize(MCI_i, K * P)$ and signal to UE the grant through DCI, with MCS set to $MCS_{dci}$, and #PRBs as P, number of repetitions set to $K$.

11. A method for slot aggregated user equipment (UEs) executing inter slot hopping and configured to avoid allocation overlapping Physical Random Access Channel (PRACH) in a slot, the method comprising:

when PRACH is on even subframe lower Physical Resource Block (PRB), a base station multi slot scheduler schedules a new transmission on even slot upper PRBs;
when PRACH is on an even subframe Upper PRB, the multi slot scheduler schedules a new transmission on an odd slot upper PRBs;
when PRACH is on an odd subframe Lower PRB, the multi slot scheduler schedules a new transmission on odd slot upper PRBs; and
when PRACH is on odd subframe Upper PRB, multi slot scheduler schedules a new transmission on an even slot upper PRBs.

12. A method for optimized packing for multiple user equipment (UEs) comprising:

to increase a Physical Uplink Shared Channel(PUSCH) capacity, scheduling higher aggregation UEs first such that a higher AggregationFactor UE has a high priority if a P_LC is multiplied by the AggregationFactor, wherein for UE selection the UE priority is calculated:

$$P\_UE = P\_LC * AggregationFactor + P\_GBR + P\_PF, or$$

$$P\_UE = (P\_LC + P\_GBR + P\_PF) *AggregationFactor;$$

where:

P_LC: is Priority based on 5QI QoS;
Slot Aggregation applies when 5QI=1 (VoNR), When 5QI!=1 then AggregationFactor =1;

P_GBR is Priority calculated based on a Guaranteed Bit Rate (GBR) metric;
P_PF is Priority calculated based on a fairness metric; and
the higher Aggregation UE is scheduled if the *slot number % AggregationFactor* = 0.

## 100

NR UE (101)

Circuitry (102)

Uu Interface (120)

NR gNB (106)

Circuitry (107)

Programmable Circuit
(102A)

Processor (103)

Memory (104)

Module (105)

Programmable Circuit
(107A)

Processor (108)

Memory (109)

Module (110)

Storage Device
(130)

**FIG. 1**

EP 4 641 963 A2

**FIG. 2**

**FIG. 3**

EP 4 641 963 A2

**FIG. 4**

EP 4 641 963 A2

FIG. 5

$M_0 \times 1$ with $MCS_{VoNR}$

1. Rate is higher
2. Not enough RE to map
3. Signalling to UE

RB
RB
RB

1. Rate is good
2. Enough RE to map.
3. Signalling to UE
4. Not enough power to reach gNB

$M_0 \times puschAggregationFactor$ with $MCS_{VoNR}$

RB
RB
RB
RB
RB
RB
RB
RB
RB
RB
RB
RB

RV ID=3
RV ID=0
RV ID=2
RV ID=1

VoNR packet: $B_{VoNR}$ bits

Channel codec

**FIG. 6**

FIG. 7

FIG. 8

**FIG. 9**

Start

gNB determined Aggregation Factor K, The link adaptation and resource allocation module determined number of PRBs $PRB_{dci}$ also determined MCSi for the allocation based on X the BSR requirement for UE

201

$for\ MCS = MCS_i \ldots MCS_{max}$

Yes

202

$if\ X \leq TBsize(MCS, PRB_{dci})$

No

Yes

203

$if\ TBsize(MCS, PRB_{dci}) \leq TBsize(MCS_i, K * PRB_{dci})$

No

Yes

204

Set $MCS_{dci} = MCS$ Signal the grant to UE through a DCI, with MCS set to $MCS_{dci}$ and #PRBs as $PRB_{dci}$

205

$MCS_{dci} = MCS - 1$;Signal to UE the grant through DCI, with MCS set to $MCS_{dci}$, and #PRBs as $PRB_{dci}$ UE may segment packet

206

Continue the algorithm with next value of MCS.

208

Yes

$if\ TBsize(MCS, PRB_{dci}) \leq TBsize(MCS_i, K * PRB_{dci})$

207

No

Set $MCS_{dci} = MCS - 1$ Signal to UE the grant through DCI, with MCS set to $MCS_{dci}$, and #PRBs as $PRB_{dci}$. UE may segment packet

209

210

Stop

EP 4 641 963 A2

FIG. 10

EP 4 641 963 A2

FIG. 11

**FIG. 12A**

**FIG. 12B**

## REFERENCES CITED IN THE DESCRIPTION

**Non-patent literature cited in the description**

- *3GPP TS 38.300 17.3.0*, 13 January 2023
- *3GPP TR 36.750 14.1.0*, 23 March 2017
- *3GPP TR 36.824 11.0.0*, 26 June 2012
- *3GPP TS 38.214 18.1.0*, 18 January 2024
- *3GPP TS 38.314 17.4.0*, 12 January 2024
- *3GPP TS 38.321 18.0.0*, 12 January 2024